# EUROPÄISCHE PATENTANMELDUNG

(11) **EP 2 682 661 A1**
(43) Veröffentlichungstag der Anmeldung: **08.01.2014**
(21) Anmeldenummer: 12174792.7
(22) Anmeldetag: 03.07.2012
(51) Int. Cl.: F16L 37/30, F17C 13/04

(54) **Vorrichtung zur kontaminationsfreien Befüllung eines Tanks aus einem Kanister**

(71) Anmelder: Bayer CropScience AG, 40789 Monheim (DE)
(72) Erfinder: Felixberger, Markus, 93073 Neutraubling (DE); Frießleben, Reinhard, 51375 Leverkusen (DE); Graef, Steffen, 93083 Obertraubling (DE); Oeser, Jörg, 45481 Mühlheim an der Ruhr (DE); Renner, Franz, 93083 Obertraubling (DE); Nissl, Stefan, 93092 Barbing (DE)
(74) Vertreter: Tetzner, Michael

(57) **Zusammenfassung**

Die erfindungsgemäße Vorrichtung zur kontaminationsfreien Befiillung eines Tanks aus einem Kanister weist im Wesentlichen folgende Merkmale auf:
a. einen Tankadapter mit einem Tank-Befestigungsflansch zur Befestigung am Tank und einem ersten Kopplungsteil,
b. einen Kanisteradapter mit einem Kanister-Befestigungsflansch zur Befestigung am Kanister und einem zweiten Kopplungsteil,
wobei der Tankadapter und der Kanisteradapter über den ersten und den zweiten Kopplungsteil lösbar miteinander verbunden sind, und
c. einen Spülanschluss zur Zuführung von Reinigungsflüssigkeit, der am Tankadapter angebracht ist.
wobei die Vorrichtung in einer Öffnungsstellung eine Fluidverbindung zwischen dem Kanister-Befestigungsflansch und dem Tank-Befestigungsflansch bereitstellt und in einer Schließstellung die Fluidverbindung zwischen dem Kanister-Befestigungsflansch und dem Tank-Befestigungsflansch verschließt.

## Beschreibung

Die Erfindung betrifft eine Vorrichtung zur kontaminationsfreien Befüllung eines Tanks aus einem Kanister, beispielsweise zum Umfüllen von flüssigen Pflanzenschutzmitteln aus Kleingebinden (Kanistern, Flaschen o. ä.) in andere, größere Gebinde, wie Fässer oder Tanks.

Bei diesen Vorrichtungen wird ein besonderes Augenmerk darauf gelegt, dass der Anwender eine exakte Befüllung oder Dosierung durchführen kann, ohne dabei mit dem zu transferierenden Fluid in Berührungskontakt zu kommen. Derartige Transfersysteme sind beispielsweise aus der DE 20 2009 016 419 U1 und der DE 696 33 403 T2 bekannt. Eine weitere wesentliche Funktion besteht darin, dass der Kanister nach dem vollständigen Entleeren mit einer Reinigungsflüssigkeit, beispielsweise Wasser, gespült werden kann.

Üblicherweise bestehen solche Vorrichtungen aus einem Tankadapter mit einem Tank-Befestigungsflansch zur Befestigung an einem Tank und einem ersten Kopplungsteil, sowie einem Kanisteradapter mit einem Kanisterbefestigungsflansch zur Befestigung an einem Kanister und einem zweiten Kopplungsteil, wobei der Tankadapter und der Kanisteradapter über den ersten und zweiten Kopplungsteil lösbar miteinander verbunden sind.

Weiterhin ist es aus der Praxis bekannt, zusätzlich ein separates Spülmodul zu montieren, um den vollständig entleerten Kanister mit einer Reinigungsflüssigkeit zu reinigen. Auf dieser Weise wird der Anwender und die Umwelt vor einem Kontakt mit dem zu transferierenden Fluid bei einer vollständigen Entleerung des Kanisters zuverlässig geschützt. Problematisch bleibt jedoch die Situation bei Teilentnahmen, wenn der noch mit einer Restmenge befüllte Kanister vom zu befüllenden Tank abgenommen wird.

Der Erfindung liegt daher die Aufgabe zugrunde, den Schutz des Anwenders vor einer Kontamination auch bei einer Teilentnahme zu verbessern.

Erfindungsgemäß wird diese Aufgabe durch die Merkmale des Anspruches 1 gelöst.

Die erfindungsgemäße Vorrichtung zur kontaminationsfreien Befüllung eines Tanks aus einem Kanister weist im Wesentlichen folgende Merkmale auf:
a. einen Tankadapter mit einem Tank-Befestigungsflansch zur Befestigung am Tank und einem ersten Kopplungsteil,
b. einen Kanisteradapter mit einem Kanister-Befestigungsflansch zur Befestigung am Kanister und einem zweiten Kopplungsteil,
   wobei der Tankadapter und der Kanisteradapter über den ersten und den zweiten Kopplungsteil lösbar miteinander verbunden sind, und
c. einen am Tankadapter angebrachten Spülanschluss zur Zuführung von Reinigungsflüssigkeit,
   wobei die Vorrichtung in einer Öffnungsstellung eine Fluidverbindung zwischen dem Kanister-Befestigungsflansch und dem Tank-Befestigungsflansch bereitstellt und in einer Schließstellung die Fluidverbindung zwischen dem Kanister-Befestigungsflansch und dem Tank-Befestigungsflansch verschließt.

Durch die Unterbringung des Spülanschlusses am Tankadapter besteht die Möglichkeit, den Verbindungsbereich zwischen dem Tankadapter und dem Kanisteradapter sowohl dann zu spülen, wenn der Kanister vollständig entleert ist, als auch bei einer Teilentnahme.

Das Vorsehen des Spülanschlusses am Tankadapter hat außerdem den Vorteil, dass der Kanisteradapter ein entsprechend geringeres Gewicht aufweist. Dies wiederum vereinfacht das Handling für den Anwender, da er üblicherweise den Kanisteradapter zunächst auf den Kanister aufschraubt und dann diese Einheit aus Kanister und Kanisteradapter mit dem Tankadapter koppelt. Im Rahmen der Erfindung ist es auch denkbar, das der Kanisteradapter fester Bestandteil des Kanisters ist. Es ist daher vorteilhaft, wenn der Kanisteradapter möglichst kostengünstig aufgebaut ist.

Weitere Ausgestaltungen der Erfindung sind Gegenstand der Unteransprüche.

Gemäß einer besonderen Ausgestaltung der Erfindung sind der erste und der zweite Kopplungsteil so ausgebildet, dass sie in der Öffnungsstellung der Vorrichtung eine erste Fluidverbindung zwischen dem Kanister-Befestigungsflansch und dem Tank-Befestigungsflansch und eine zweite, absperrbare Fluidverbindung zwischen dem Spülanschluss und dem Kanister-Befestigungsflansch bereitstellen.

Zur fluiddichten Verbindung von Tankadapter und Kanisteradapter kann am ersten oder zweiten Kopplungsteil wenigstens ein Dichtelement vorgesehen werden. Gemäß einer weiteren Ausgestaltung der Erfindung ist im Kanisteradapter ein Schließkolben geführt, der über ein Betätigungselement zwischen der Öffnungsstellung und der Schließstellung verstellbar ist. Dieser Schließkolben kann einen inneren Kanal aufweisen, der in der Öffnungsstellung der Vorrichtung die zweite Fluidverbindung zwischen dem Spülanschluss und dem Kanisterbefestigungsflansch bereitstellt. Weiterhin kann der Kanisteradapter einen um den Schließkolben angeordneten äußeren Kanal aufweisen, der in der Öffnungsstellung einen Teil der ersten Fluidverbindung zwischen dem Kanisterbefestigungsflansch und dem Tank-Befestigungsflansch darstellt.

Weiterhin kann der Schließkolben eine erste Kontaktfläche aufweisen, die mit einer am Tankadapter vorgesehenen zweiten Kontaktfläche in Wirkkontakt steht, wenn der zweite Kopplungsteil des Kanisteradapters mit dem ersten Kopplungsteil des Tankadapters gekoppelt ist. Gemäß einer bevorzugten Ausgestaltung der Erfindung ist vorgesehen, dass der innere Kanal des Schließkolbens mit einem Ende in der ersten Kontaktfläche mündet und mit seinem anderen Ende mit dem Kanister-Befestigungsflansches in Verbindung steht und der Tankadapter einen verschließbaren Verbindungskanal aufweist, der mit einem Ende in der zweiten Kontaktfläche mündet und mit seinem anderen Ende mit dem Spülanschluss in Verbindung steht, wobei der in der zweiten Kontaktfläche mündende Verbindungskanal und der in der ersten Kontaktfläche mündende innere Kanal des Schließkolbens miteinander verbunden sind, wenn der Tankadapter und der Kanisteradapter über die beiden Kontaktflächen miteinander in Kontakt stehen. Dabei ist es zweckmäßig, wenn zwischen den beiden Kontaktflächen wenigstens eine Dichtung vorgesehen ist.

Gemäß einer weiteren Ausgestaltung der Erfindung ist der Schließkolben in einer Kulissenführung am Kanisteradapter geführt, wobei eine Verdrehung des Kanisteradapters eine Verschiebung des Schließkolbens relativ zum Kanisteradapter bewirkt. Weiterhin kann vorgesehen werden, dass der zweite Kopplungsteil des Tankadapters mit einem Betätigungselement drehbar am Tankadapter gehaltert ist. In einer weiteren Ausgestaltung steht die erste Kontaktfläche des Schließkolbens drehfest mit der zweiten Kontaktfläche am Tankadapter in Kontakt, wenn der zweite Kopplungsteil des Kanisteradapters mit dem ersten Kopplungsteil des Tankadapters gekoppelt ist, wobei eine anschließende Drehung des zweiten Kopplungsteils relativ zum Tankadapter eine Verschiebung des Schließkolbens relativ zum Kanisteradapter bewirkt.

Weiterhin ist vorgesehen, dass die erste Kontaktfläche des Schließkolbens mit der zweiten Kontaktfläche am Tankadapter in Kontakt steht, wenn der zweite Kopplungsteil des Kanisteradapters mit dem ersten Kopplungsteil des Tankadapters gekoppelt ist, und wobei die zweite Kontaktfläche in Bewegungsrichtung des Schließkolbens verschiebbar am Tankadapter gehaltert ist und ein Federelement die zweite Kontaktfläche gegen die erste Kontaktfläche drückt. Die Verschiebung bzw. ein Abheben der zweiten Kontaktfläche von der ersten Kontaktfläche kann durch ein weiteres Betätigungselement erfolgen, während der zweite Kopplungsteil des Kanisteradapters mit dem ersten Kopplungsteil des Tankadapters gekoppelt ist. Auf diese Weite ist eine zusätzliche Spülung bzw. Reinigung der beiden Kontaktflächen mit einer über den Spülanschluss zugeführten Reinigungsflüssigkeit möglich.

Kanister, insbesondere solche, welche Pflanzenschutzmittel enthalten, sind vor dem ersten Gebrauch im Bereich des Auslasses mit einer Siegelfolie verschlossen. Vielfach werden solche Siegelfolien vom Anwender per Hand entfernt, wobei ein Hautkontakt mit dem Fluid oder einem etwaigen Schutzhandschuh schnell passiert ist. In einer bevorzugten Ausgestaltung der Erfindung ist der Kanisteradapter daher im Bereich des Kanister-Befestigungsflansches mit einem integrierten Folienschneidelement zum Aufschneiden der Siegelfolie des Kanisters versehen. Das Folienschneidelement kann dabei durch einen, insbesondere schräg zur Längsmittelachse des Kanisteradapters ausgerichteten, Zahnkranz gebildet werden. Weiterhin kann der Kanisteradapter eine Schiebehülse aufweisen, an welcher der Kanister-Befestigungsflansch befestigt ist, wobei die Schiebehülse relativ zum Folienschneidelement axial verschiebbar ist.

Durch das integrierte Folienschneidelement muss der Anwender daher die Siegelfolie nicht selbst entfernen, sondern schraubt lediglich den Kanisteradapter mit Hilfe des Befestigungsflansches auf die Auslassöffnung des Kanisters auf. Entweder wird durch diesen Einschraubvorgang die Siegelfolie automatisch aufgeschnitten oder das Öffnen erfolgt erst nach dem Aufschrauben, indem das Folienschneidelement mittels der Schiebehülse mit der Siegelfolie zum Öffnen derselben in Kontakt gebracht wird.

Die oben beschriebene Vorrichtung zur kontaminationsfreien Befüllung eines Tanks aus einem Kanister zeichnet sich durch einen verbesserten Schutz des Anwenders vor einem etwaigen Kontakt mit dem im Kanister befindlichen Fluid aus. Dabei wird durch den Spülanschluss nicht nur das Spülen eines entleerten Kanisters, sondern auch das Spülen der Kontaktbereiche zwischen Tankadapter und Kanisteradapter im Falle einer Teilentnahme ermöglicht.

Das integrierte Folienschneidelement stellt darüber hinaus sicher, dass auch beim Anbringen des Kanisteradapters am Kanisters und/oder bei der Kopplung mit dem Tankadapter ein Kontakt mit dem zu transferierenden Fluid zuverlässig verhindert wird.

Im Folgenden wird ein Ausführungsbeispiel der Erfindung anhand der Zeichnung näher erläutert.

In der Zeichnung zeigen
- Fig. 1: eine dreidimensionale Darstellung vor der Verbindung eines Kanisters mit einem Tank,
- Fig. 2: eine Schnittdarstellung des Tankadapters und des Kanisteradapters vor deren Kopplung,
- Fig. 3: eine dreidimensionale Darstellung im gekoppelten Zustand von Tankadapter und Kanisteradapter,

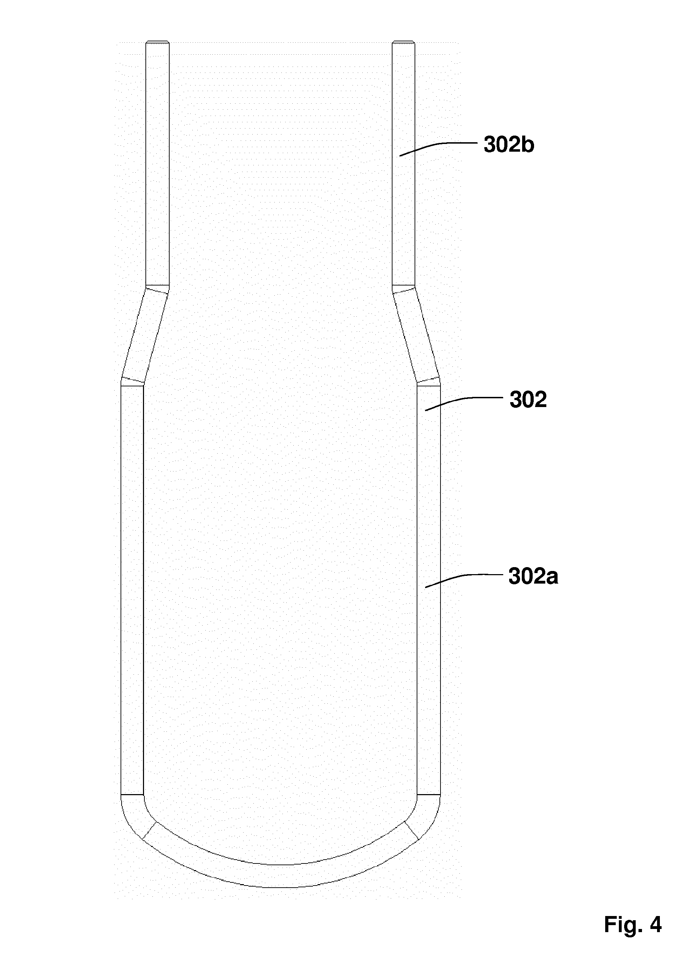

- Fig. 4: eine Draufsicht des Betätigungselementes zur Arretierung des Kanisteradapters mit dem Tankadapter und zur Drehung des zweiten Kopplungsteils des Tankadapters,
- Fig. 5: eine Schnittdarstellung der erfindungsgemäßen Vorrichtung in der Schließstellung und vor dem Öffnen der Siegelfolie,
- Fig. 6: eine Schnittdarstellung der erfindungsgemäßen Vorrichtung in der Schließstellung und nach dem Öffnen der Siegelfolie,
- Fig. 7: Schnittdarstellung der Vorrichtung in der Öffnungsstellung zwischen Kanisterbefestigungsflansch und Tankbefestigungsflansch,
- Fig. 8: Schnittdarstellung der Vorrichtung während der Spülung des Kanisters,
- Fig. 9: Schnittdarstellung der Vorrichtung während der Spülung der Kontaktflächen und
- Fig. 10: schematische Darstellung der Vorrichtung, bei welcher der Tankadapter statt dem Kanisteradapter mit einem Spül- oder Abschlussdeckel verschlossen ist.

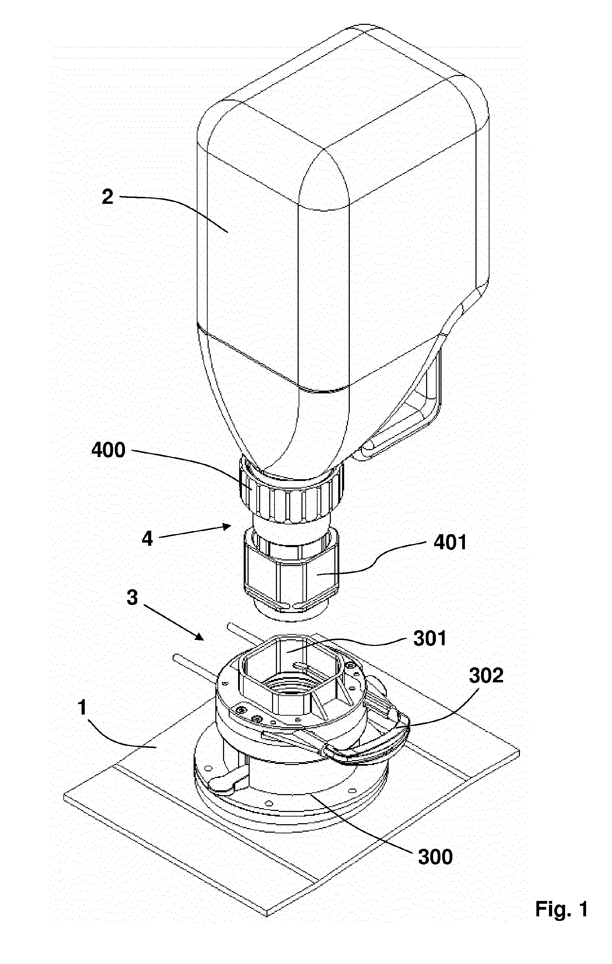

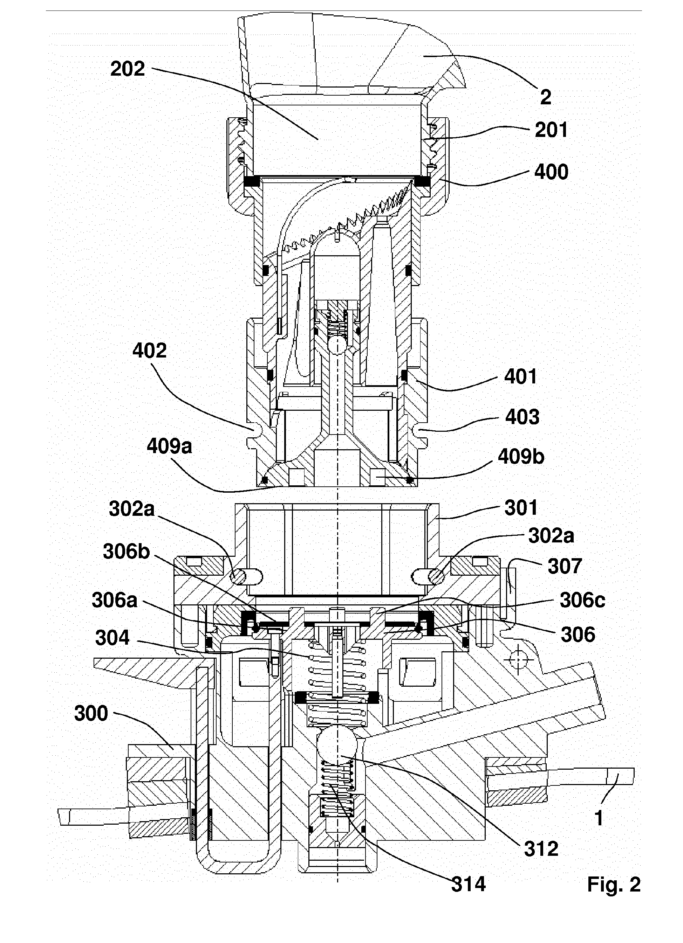

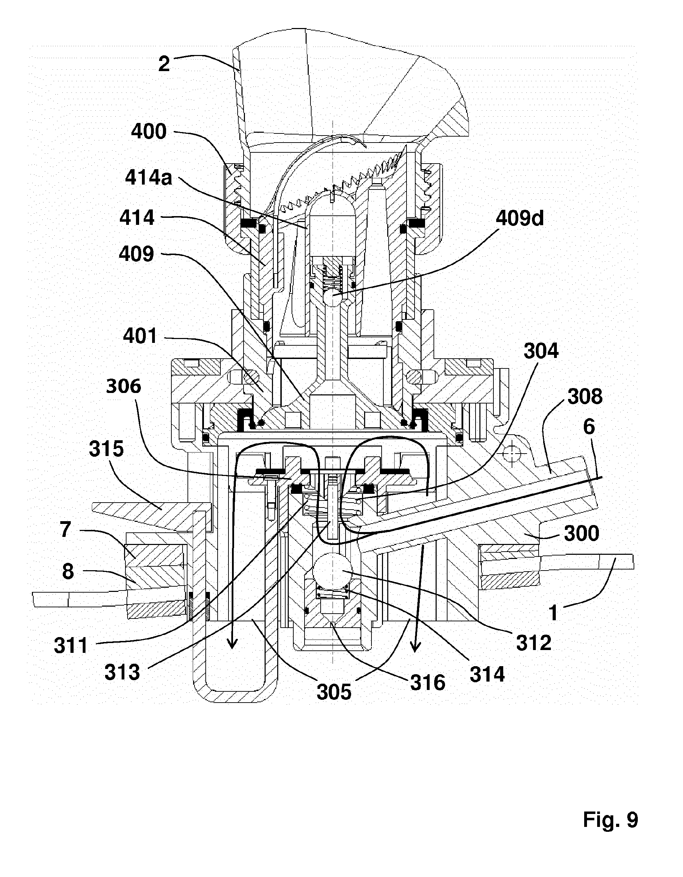

Die Figuren 1 und 2 zeigen eine Vorrichtung zur kontaminationsfreien Befüllung eines Tanks 1 aus einem Kanister 2 vor der Ankopplung des Kanisters an den Tank. Die Vorrichtung weist einen Tankadapter 3 mit einem Tankbefestigungsflansch 300 zur Befestigung am Tank 1 und einen ersten Kopplungsteil 301 sowie einen Kanisteradapter 4 mit einem Kanisterbefestigungsflansch 400 zur Befestigung am Kanister 2 und einen zweiten Kopplungsteil 401 auf. Der Kanisterbefestigungsflansch 400 ist hier als Überwurfmutter ausgebildet, die mit einem Außengewinde 201 einer Öffnung 202 des Kanisters 2 zusammenwirkt. Zur Befestigung des Tankadapters 3 am Tank 1 sind zwei gegeneinander verdrehbare Keilscheiben 7, 8 vorgesehen (siehe Fig. 9), mit deren Hilfe der Tankadapter bis zu einem gewissen Grad auch auf geneigten Flächen exakt vertikal montiert werden kann.

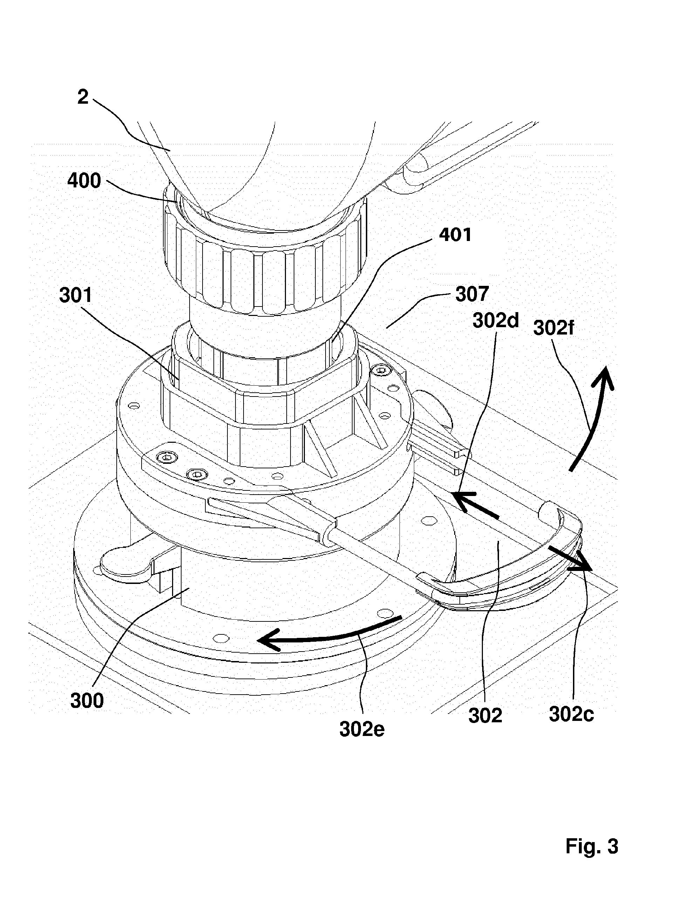

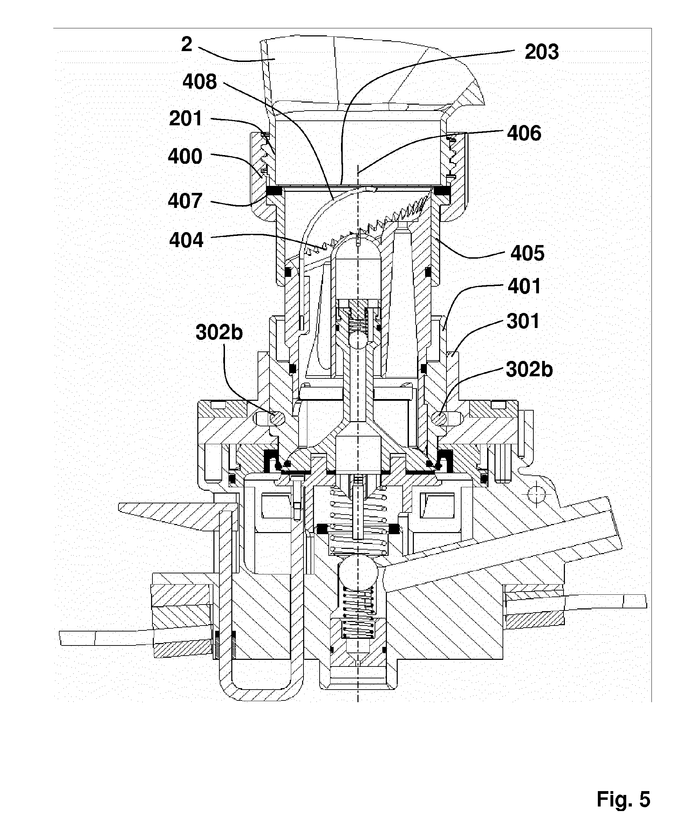

Der zweite Kopplungsteil 401 des Kanisteradapters 4 weist einen achteckigen Außenquerschnitt auf, der komplementär zum ersten Kopplungsteil 301 des Tankadapters 3 ausgebildet ist. Beim Zusammenstecken der beiden Adapter wird der zweite Kopplungsteil 401 in den ersten Kopplungsteil 301 eingesteckt, wie das aus den Figuren 3 und 5 hervorgeht. Ein als Sicherungsbügel ausgebildetes Betätigungselement 302 dient durch Ziehen in Richtung des Pfeils 302c zum Fixieren/Arretieren des zweiten Kopplungsteil 401 im ersten Kopplungsteil 301. Das Betätigungselement 302 ist etwa U-förmig ausgebildet, wobei die beiden Schenkel in den vorderen Schenkelbereichen 302b gegenüber den verbleibenden Schenkelbereichen 302a nach innen gekröpft ausgebildet sind. Zum Einführen des Kanisteradapters in den Tankadapter befindet sich das Betätigungselement 302 mit seinen Schenkelbereichen 302a im Bereich des ersten Kopplungsteils 301, sodass der Kanisteradapter 4 eingeführt werden kann. Durch Ziehen des Betätigungselementes 302 in Richtung des Pfeils 302c werden die Schenkelbereiche 302b in den Bereich des ersten Kopplungsteils 301 verlagert und kommen dort mit am Kanisteradapter 4 ausgebildeten Nuten 402 und 403 in Eingriff und arretieren auf diese Weise den Kanisteradapter im Tankadapter. Zum Lösen der beiden Adapter wird das Befestigungselement 302 in Richtung des Pfeils 302d in den Tankadapter 3 hineingeschoben, sodass die Schenkelbereiche 302b den Kanisteradapter 4 wieder freigeben. Die beiden unterschiedlichen Schiebestellungen des Betätigungselementes 302 sind durch die Schenkelbereiche 302a in Fig. 2 bzw. die Schenkelbereiche 302b in Fig. 5 ersichtlich.

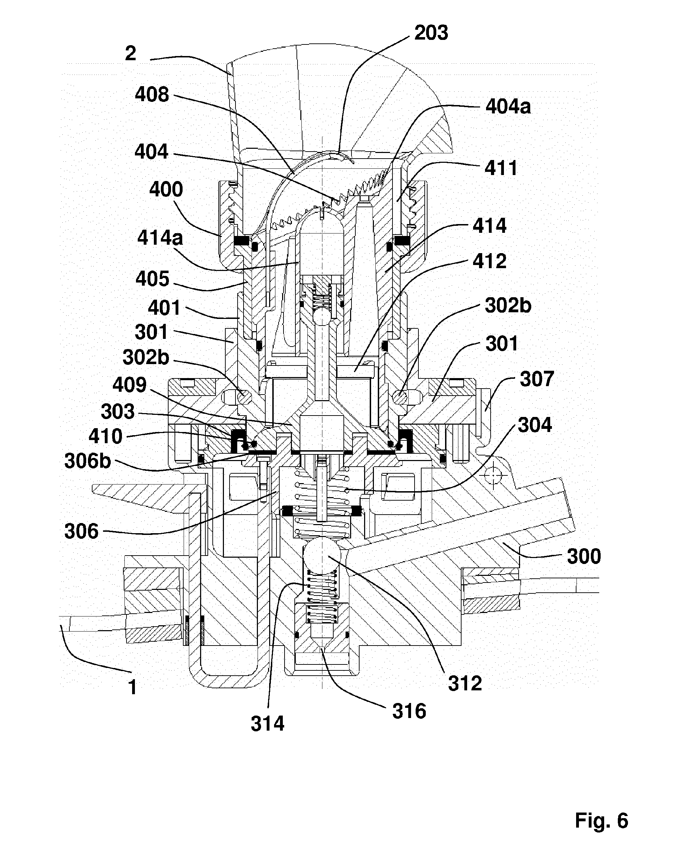

Der Kanisteradapter 4 weist ein integriertes Folienschneidelement 404 auf, das im dargestellten Ausführungsbeispiel durch einen schräg zur Längsmittelachse des Kanisteradapters ausgerichteten Zahnkranz gebildet wird. Die Funktion des Folienschneidelements 404 wird im Folgenden anhand der Figuren 5 und 6 näher erläutert. Der Kanister-Befestigungsflansch 400 ist auf einer Schiebehülse 405 angebracht, die relativ zum Kanisteradapter 4 und insbesondere relativ zum Folienschneidelement 404 in Richtung der Längsmittelachse 406 des Kanisteradapters 4 verschiebbar ist.

Der Kanister 2 ist üblicherweise mit einer Siegelfolie 203 verschlossen, wobei der Kanister-Befestigungsflansch 400 in der Stellung der Schiebehülse gemäß Fig. 5 auf das Außengewinde 201 des Kanisters 200 aufgeschraubt werden kann, ohne dabei die Siegelfolie 203 aufzubrechen. Das Folienschneidelement 404 befindet sich dabei im Inneren der Schiebehülse 405. Auf die Weise wird zuverlässig verhindert, dass das im Kanister 5 befindliche Fluid austreten kann. Der Kanister-Befestigungsflansch wird mit einer zwischen Kanister 2 und Kanisteradapter 4 vorgesehenen Dichtung 407 flüssigkeitsdicht am Kanister 2 aufgeschraubt. Dann wird der Kanister 2 mit dem aufgeschraubten Kanisteradapter 4 mit dem Tankadapter gekoppelt.

Erst dann wird die Schiebehülse 405 nach unten in die in Fig. 6 gezeigte Stellung geschoben, wobei sich der über den Kanister-Befestigungsflansch 400 fest mit der Schiebehülse 405 befestigte Kanister 2 mitbewegt. Der Zahnkranz des Folienschneidelements 404 durchtrennt dabei sukzessive die Siegelfolie 203. Ein durch das Aufschrauben des Kanisters vorgespannter Federbügel 408 drückt die Siegelfolie 203 in den Kanister 2 hinein und hält somit die Verbindung zwischen dem Kanister 2 und dem Kanisteradapter 4 offen. Die Siegelfolie wird durch das Folienschneidelement 404 bis auf einen kleinen Bereich hinter dem Federbügel 408 durch diese Axialverschiebung der Schiebehülse 4 aufgetrennt.

Der Vorteil des Zahnkranzes gegenüber einer durchgehenden Schneidfläche liegt in der punktförmig deutlich höheren Pressung, die sofort zum Einreißen der Siegelfolie am Zahnauflagepunkt führt. Es kommt somit nicht zu einer übermäßigen Dehnung der Siegelfolie. Hierdurch können selbst elastische Folien auch bei großem Schneidspalt 411 einwandfrei geöffnet werden. Das Öffnungsverhalten kann noch weiter verbessert werden, wenn der oberste Zahn 404a des Folienschneidelements 404 etwas größer und vor allem vorstehend ausgebildet ist. Auf diese Weise findet durch die gesamte Axialkraft zunächst eine Initialperforation statt, sodass das weitere Aufschneiden der Siegelfolie erleichtert wird.

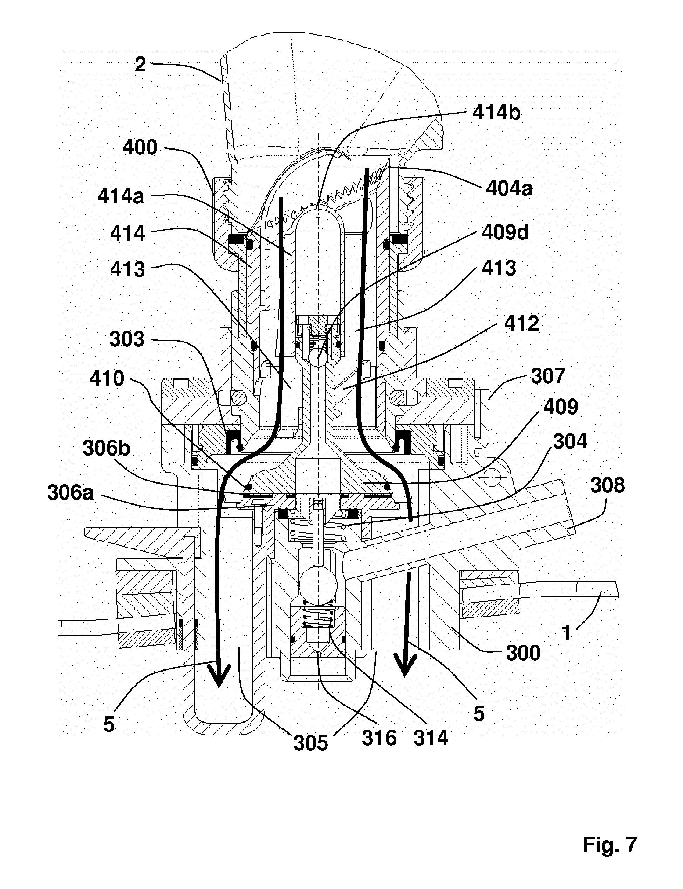

Die Vorrichtung zur kontaminationsfreien Befüllung des Tanks 1 aus dem Kanister 2 hat eine in Fig. 6 gezeigte Schließstellung, in der die Fluidverbindung zwischen dem Kanister-Befestigungsflansch 400 und dem Tankbefestigungsflansch 300 verschlossen ist und eine in Fig. 7 gezeigte Öffnungsstellung, in der eine erste Fluidverbindung zwischen dem Kanister-Befestigungsflansch und dem Tank-Befestigungsflansch bereitgestellt wird. Zur Realisierung dieser beiden Stellungen der Vorrichtung ist im dargestellten Ausführungsbeispiel ein im Kanisteradapter 4 geführter Schließkolben 409 vorgesehen. Die Abdichtung des Schließkolbens 409 gegenüber dem zweiten Kopplungsteil 401 des Kanisteradapters 4 erfolgt über einen O-Ring 410. Des Weiteren ist der zweite Kopplungsteil 401 des Kanisteradapters 4 über ein Dichtelement 303 gegenüber dem Tank-Befestigungsflansch 300 radial abgedichtet. Der Schließkolben 409 wird über ein im Tankadapter 3 angeordnetes, als Spiralfeder ausgebildetes Federelement 304 in die in Fig. 6 gezeigte Schließstellung gedrückt.

Der Schließkolben 409 ist mit einer Kulissenführung 412 am Kanisteradapter 4 geführt, wobei eine Verdrehung des Schließkolbens 409 gegenüber dem Kanisteradapter 4 eine Verschiebung des Schließkolbens relativ zum Kanisteradapter zwischen den beiden in Fig. 6 und Fig. 7 gezeigten Stellungen bewirkt. Die Drehung des Schließkolbens und damit die axiale Verschiebung des Schließkolbens relativ zum Kanisteradapter 4 erfolgt ebenfalls über das Betätigungselement 302, wobei diese in Richtung der Pfeile 302e bzw. 302f gedreht wird.

Hierzu ist der mit dem Kanisteradapter 4 gekoppelte erste Kopplungsteil 301 des Tankadapters 3 über das Betätigungselement 302 relativ zum Tank-Befestigungsflansch 300 drehbar. Der Drehwinkel wird durch Anschläge begrenzt und beträgt beispielsweise 30°. Je nach Drehstellung des ersten Kopplungsteils 301 befindet sich der Schließkolben entweder in der Schließstellung gemäß Fig. 6, in der Öffnungsstellung gemäß Fig. 7 oder in einer Zwischenstellung. Der Kanisteradapter 4 weist einen um den Schließkolben 409 angeordneten äußeren Kanal 413 auf, der in der Öffnungsstellung gemäß Fig. 7 einen Teil der ersten Fluidverbindung zwischen dem Kanister-Befestigungsflansch 400 und dem Tank-Befestigungsflansch 300 darstellt. Die Strömung des Fluids 5 ist in Fig. 7 durch Pfeile angedeutet.

Das Folienschneidelement 404 ist auf einer Buchse 414 angeordnet, die eine innere Führungshülse 414a vorsieht, in der das dem Kanister 2 zugewandte Ende des Schließkolbens 409 gleitverschieblich geführt ist. Der äußere Kanal 413 des Kanisteradapters 4 wird in diesem Bereich durch den zwischen Buchse 414 und der Führungshülse 414a gebildeten Ringraum ausgebildet. Der Tank-Befestigungsflansch 300 ist in seinem in dem Tank 1 hineinragenden Bereich mit wenigstens einer Auslassöffnung 305 versehen, über welche das Fluid 5 aus dem Kanister 2 in den Tank 1 gelangt.

Der Schließkolben 409 weist außerdem eine erste Kontaktfläche 409a (siehe Fig. 2) auf, die mit einer am Tankadapter 3 auf einer Schiebehülse 306 vorgesehenen zweiten Kontaktfläche 306a zusammenwirkt, wenn der zweite Kopplungsteil 401 des Kanisteradapters 4 mit dem ersten Kopplungsteil 301 des Tankadapters 3 gemäß Fig. 6 gekoppelt ist. Zwischen den beiden Kontaktflächen 409a und 306a ist eine Dichtung 306b vorgesehen. Die Schiebehülse 306 wird dabei über das Federelement 304 gegen den Schließkolben 409 gedrückt. Die beiden Kontaktflächen 409a, 306a greifen so ineinander, dass eine Verdrehung des Schließkolbens 309 gegenüber der Schiebehülse 306 verhindert wird. Hierzu ist die zweite Kontaktfläche 306 mit Zapfen 306c ausgestattet, die in entsprechend komplementär ausgebildete Aussparungen 409b am Schließkolben 409 eingreifen, wobei vorzugsweise jeweils vier Bohrungen und Aussparungen vorgesehen sind, die in den Ecken eines Quadrats angeordnet sind. Die Schiebehülse 306 ist darüber hinaus im Tankadapter 3 axial verschiebbar, aber drehfest gehaltert. Durch diese Konstruktion kann sich der Schließkolben 409 gegenüber dem Tankadapter 3 nicht drehen. Eine Drehung des Betätigungselements 302 bewirkt jedoch eine Drehung des Kanisteradapters, sodass es durch die Kulissenführung 412 zu einer Axialverschiebung des Schließkolbens 409 von der in Fig. 6 gezeigten Schließstellung in die in Fig. 7 gezeigte Öffnungsstellung kommt. Dabei wird die Schiebehülse 306 gegen den Druck des Federelements 304 in den Tankadapter hineingedrückt.

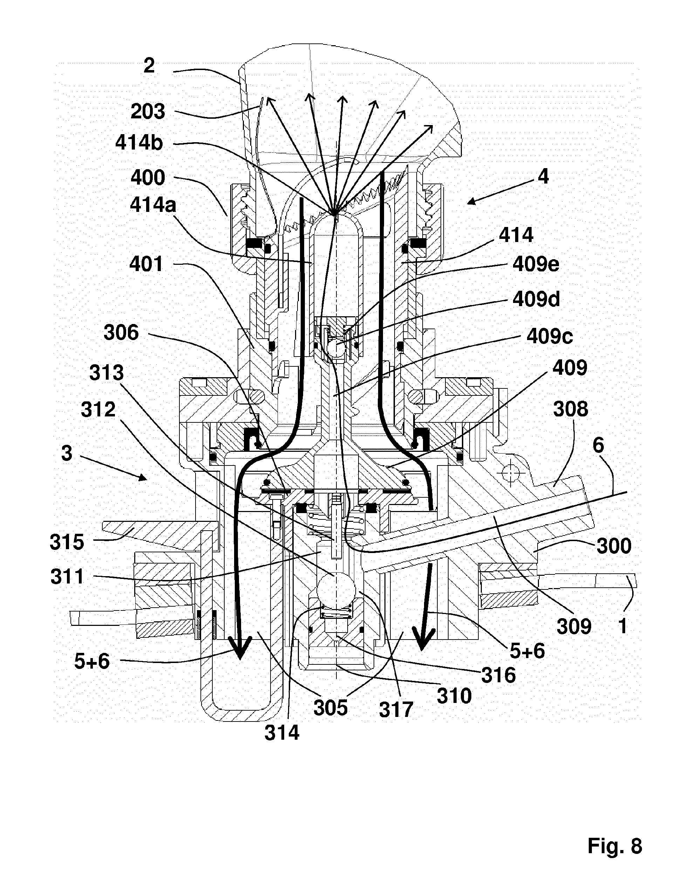

Die Kulissenführung 412 verläuft an ihrem oberen und unteren Ende vorzugsweise horizontal, sodass der Schließkolben 409 im geöffneten (Fig. 7) und geschlossenen (Fig. 6) Zustand jeweils arretiert ist. Die Entleerungsgeschwindigkeit lässt sich über den Drehwinkel des Betätigungselementes 302 und damit über den Öffnungsweg des Schließkolbens 409 beliebig steuern. Eine Anschlagleiste 307 am Tankadapter 3 verhindert, dass das Betätigungselement 302 während der Entleerung (Fig. 8) des Kanisters 2 in Richtung des Pfeils 302d gedrückt wird und damit die dichte Verbindung zwischen Kanister- und Tankadapter gelöst werden kann.

Eine weitere Besonderheit der Vorrichtung besteht in dem am Tankadapter 3 angebrachten Spülanschluss 308, über den sowohl der entleerte Kanister 2 als auch die beiden Kontaktflächen 409a, 306a bei einer Teilentnahme gespült werden können.

Im Folgenden werden diese beiden Spülvarianten anhand der Figuren 8 und 9 näher erläutert.

Im Tankadapter 3 verläuft vom Spülanschluss 308 eine Spülleitung 309 bis zur Längsmittelachse 310 des Tankadapters 3 und mündet unterhalb der Schiebehülse 306 in einen zentralen Verbindungskanal 311. Der Schließkolben 409 weist ferner einen inneren Kanal 409c auf, der mit einem Ende in der ersten Kontaktfläche 409a mündet und mit seinem anderen Ende über die Führungshülse 414a am Kanister-Befestigungsflansch 400 ausmündet. Der Verbindungskanal 311 mündet in der zweiten Kontaktfläche 306a, sodass der inneren Kanal 409c und der Verbindungskanal 311 ineinander übergehen. Die Führungshülse 414a weist an seinem zum Kanister 2 gewandten Ende ein oder mehrere Düsenöffnungen 414b auf. Die über den Spülanschluss 308 zugeführte Reinigungsflüssigkeit 6 nimmt den in Fig. 8 dargestellten Strömungsverlauf (zweite Fluidverbindung) über die Spülleitung 309, den Verbindungskanal 311, den inneren Kanal 409c und die Führungshülse 414a und tritt über die Düsenöffnung 414b in mehreren Teilstrahlen in den Kanister 2 aus, um noch im Kanister verbliebene Reste des Fluids 5 auszulösen. Die Spülflüssigkeit mit den ausgelösten Resten nimmt dann den schon aus Fig. 7 bekannten Weg (erste Fluidverbindung).

Im Strömungsweg der Reinigungsflüssigkeit 6 sind im Bereich des Verbindungskanals 311 ein als Kugelventil ausgebildetes erstes Absperrelement 312 und an dem der ersten Kontaktfläche 409a abgewandten Ende des inneren Kanals 409c ein zweites, als Kugelventil ausgebildetes Absperrelement 409d angeordnet. Das erste Absperrelement 312 wird über einen mit der Schiebehülse 306 verbundenen Betätigungsstift 313 geöffnet, wenn die Schiebehülse 306 von der in Fig. 2 gezeigten Stellung in die Stellung gemäß Fig. 7 bzw. 8 gelangt. In der Schließstellung des ersten Absperrelements 312 gemäß Fig. 6 wird ein Austreten von Reinigungsflüssigkeit 6 auch dann zuverlässig vermieden, wenn die Reinigungsflüssigkeit 6 mit Druck ansteht, da der Druck der Reinigungsflüssigkeit das Absperrelement 312 in seine Schließstellung drückt. Außerdem wird das Absperrelement 312 mit einem Federelement 314 in die Schließstellung gedrückt. Damit die Spülleitung 309 bei einer Stellung des Absperrelements in der Schließstellung gemäß Fig. 6 immer drucklos bleibt, ist eine kleine Bohrung 316 vorgesehen, über die eine ggf. anstehende Reinigungsflüssigkeit 6 in den Tank abfließen kann.

Wird die Schiebehülse 306 durch den Schließkolben 409 in die Stellung gemäß den Figuren 7 und 8 verschoben, drückt der Betätigungsstift 313 das erste Absperrelement 312 gegen den Druck des Federelements 314 auf einen Sitz 317 und verschließt dabei die Verbindung zwischen der Spülleitung 309 und der Bohrung 316.

Das zweite Absperrelement 409d wirkt ebenfalls mit einem Federelement 409e zusammen, wobei die Schließrichtung zum ersten Absperrelement genau entgegengerichtet ist. Mit anderen Worten befindet sich das zweite Absperrelement 409d in der Stellung gemäß den Figuren 7 und 8 in seiner Schließstellung, in dem es durch das Federelement 409e auf seinen Ventilsitz gedrückt wird. Auf diese Weise wird verhindert, dass das Fluid 5 aus dem Kanister 2 über die Düsenöffnung 414b in den für die Reinigungsflüssigkeit 6 bestimmten Strömungskanal gelangt und ggf. unkontrolliert über den Spülanschluss 308 austritt. Das Federelement 409e ist so bemessen, dass das zweite Absperrelement 409d durch die mit Druck anstehende Reinigungsflüssigkeit 6 geöffnet werden kann. Als Reinigungsflüssigkeit wird üblicherweise Spülwasser verwendet. Hierzu kann beispielsweise eine Druckwasserleitung mit einem Momentabstellventil an den Spülanschluss 308 angeschlossen. Bei geöffnetem Schließkolben 409 ist das erste Absperrelement 312 durch den Betätigungsstift 313 geöffnet, sodass die Reinigungsflüssigkeit über das zweite Absperrelement 409d zur Düsenöffnung 414b gelangen kann. Die Spülflüssigkeit aus dem gereinigten Kanister 2 läuft dabei gleichzeitig über den äußeren Kanal 413 und den gleichzeitig geöffneten Schließkolben 409 ab.

Durch das erste Absperrelement 312 wird verhindert, dass sich bei geschlossenem Schließkolben 409 der Druck der Reinigungsflüssigkeit 6 in den Kanister 2 überträgt und diesen ggf. zum Platzen bringt.

Soll lediglich eine Teilmenge aus dem Kanister 2 entnommen werden, wird der Schließkolben 409 nach Entnahme der gewünschten Menge wieder in seine Schließstellung gemäß Fig. 6 gebracht, in dem das Betätigungselement 302 entgegen dem Uhrzeigersinn in Richtung des Pfeils 302d gedreht wird. Bevor der Kanister 2 zusammen mit dem Kanisteradapter 4 vom Tankadapter 3 abgezogen wird, kann gemäß einer weiteren Ausgestaltung der Erfindung eine Spülung der ersten Kontaktfläche 408a und der zweiten Kontaktfläche 306a wie folgt durchgeführt werden:

Am Tankadapter 3 ist ein Hebel 315 vorgesehen, mit dem die Schiebehülse 306, und damit die zweite Kontaktfläche 306a samt Dichtung 306b, gegen den Druck des Federelements 304 nach unten verschoben wird. Auch hierbei wird über den Betätigungsstift 313, der mit der Schiebehülse 306 fest verbunden ist, das erste Absperrelement 312 gegen den Druck des Federelements 314 auf den Sitz 317 verschoben, sodass Reinigungsflüssigkeit 6 über den Verbindungskanal 311 zu den beiden Kontaktflächen gelangen kann, um diese zu spülen. Das zweite Absperrelement 409d verhindert dabei ein Eindringen von Reinigungsflüssigkeit in den Kanister 2, da der Spülbereich durch den freien Ablauf drucklos ist. Die Reinigung der Kontaktflächen kann aber natürlich auch nach einer Komplettentleerung des Kanisters 2 erfolgen.

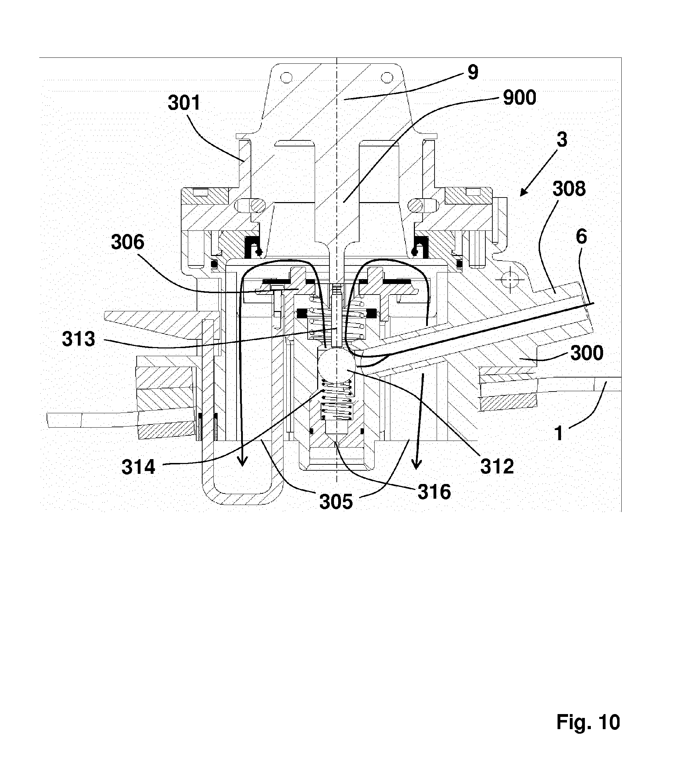

Der Tankadapter 3 kann außerdem ohne aufgesetzten Kanisteradapter 4 gespült werden, wenn ein spezieller Spül- oder Abschlussdeckel 9 aufgesetzt wird, der den Tankadapter 3 nach außen verschließt und mit einem integrierten Betätigungsstift 900 das erste Absperrelement 312 öffnet. Der Spül- oder Abschlussdeckel 9 wird in analoger Weise zur Befestigung des Kanisteradapters durch Ziehen des Betätigungselementes 302 arretiert. Die Reinigungsflüssigkeit 6 nimmt dann den in Fig. 10 dargestellten Strömungsweg.

## Patentansprüche

1. Vorrichtung zur kontaminationsfreien Befüllung eines Tanks (1) aus einem Kanister (2) mit
a. einem Tankadapter (3) mit einem Tank-Befestigungsflansch (300) zur Befestigung am Tank und einem ersten Kopplungsteil (301),
b. einem Kanisteradapter (4) mit einem Kanister-Befestigungsflansch (400) zur Befestigung am Kanister (2) und einem zweiten Kopplungsteil (401),
wobei der Tankadapter (3) und der Kanisteradapter (4) über den ersten und den zweiten Kopplungsteil (301, 401) lösbar miteinander verbunden sind, und
c. einem Spülanschluss (308) zur Zuführung von Reinigungsflüssigkeit (6), der am Tankadapter (3) angebracht ist,
wobei die Vorrichtung in einer Öffnungsstellung eine Fluidverbindung zwischen dem Kanister-Befestigungsflansch (400) und dem Tank-Befestigungsflansch (300) bereitstellt und in einer Schließstellung die Fluidverbindung zwischen dem Kanister-Befestigungsflansch (400) und dem Tank-Befestigungsflansch (300) verschließt.

2. Vorrichtung nach Anspruch 1, **dadurch gekennzeichnet, dass** der erste und der zweite Kopplungsteil (301, 401) in der Öffnungsstellung der Vorrichtung eine erste Fluidverbindung zwischen dem Kanister-Befestigungsflansch (400) und dem Tank-Befestigungsflansch (300) und eine zweite, absperrbare Fluidverbindung zwischen dem Spülanschluss (308) und dem Kanister-Befestigungsflansch (400) bereitstellt.

3. Vorrichtung nach Anspruch 1, **dadurch gekennzeichnet, dass** zur fluiddichten Verbindung von Tankadapter (3) und Kanisteradapter (4) am ersten oder zweiten Kopplungsteil (301, 401) wenigstens ein Dichtelement (303, 306b, 410) vorgesehen ist.

4. Vorrichtung nach Anspruch 1, **dadurch gekennzeichnet, dass** im Kanisteradapter (4) ein Schließkolben (409) geführt ist, der über ein Betätigungselement (302) zwischen der Öffnungsstellung und der Schließstellung verstellbar ist.

5. Vorrichtung nach Anspruch 4 **dadurch gekennzeichnet, dass** der Schließkolben (409) einen inneren Kanal (409c) aufweist, der in der Öffnungsstellung der Vorrichtung eine Fluidverbindung zwischen dem Spülanschluss (308) und dem Kanister-Befestigungsflansch (400) bereitstellt.

6. Vorrichtung nach Anspruch 4 **dadurch gekennzeichnet, dass** der Kanisteradapter (4) einen um den Schließkolben (409) angeordneten äußeren Kanal (413) aufweist, der in der Öffnungsstellung einen Teil der Fluidverbindung zwischen dem Kanister-Befestigungsflansch (400) und dem Tank-Befestigungsflansch (300) darstellt.

7. Vorrichtung nach Anspruch 4 **dadurch gekennzeichnet, dass** der Schließkolben (409) eine erste Kontaktfläche (409a) aufweist, die mit einer am Tankadapter (3) vorgesehenen zweiten Kontaktfläche (306a) in Wirkkontakt steht, wenn der zweite Kopplungsteil (401) des Kanisteradapters (4) mit dem ersten Kopplungsteil (301) des Tankadapters (3) gekoppelt ist.

8. Vorrichtung nach Anspruch 5 und 7 **dadurch gekennzeichnet, dass** der innere Kanal (409c) des Schließkolbens (409) mit einem Ende in der ersten Kontaktfläche (409a) mündet und mit seinem anderen Ende mit dem Kanister-Befestigungsflansches (400) in Verbindung steht und der Tankadapter (3) einen verschließbaren Verbindungskanal (311) aufweist, der mit einem Ende in der zweiten Kontaktfläche (306a) mündet und mit seinem anderen Ende mit dem Spülanschluss (308) in Verbindung steht, wobei der in der zweiten Kontaktfläche (306a) mündende Verbindungskanal (311) und der in der ersten Kontaktfläche (409a) mündende innere Kanal (409c) des Schließkolbens (409) miteinander verbunden sind, wenn der Tankadapter (3) und der Kanisteradapter (4) über die beiden Kontaktflächen miteinander in Kontakt stehen.

9. Vorrichtung nach Anspruch 7 **dadurch gekennzeichnet, dass** zwischen den beiden Kontaktflächen (306a, 409a) eine Dichtung (306b) vorgesehen ist.

10. Vorrichtung nach Anspruch 4 **dadurch gekennzeichnet, dass** der Schließkolben (409) in einer Kulissenführung (412) am Kanisteradapter (4) geführt ist, wobei eine Verdrehung des Kanisteradapters (4) gegenüber dem Schließkolben (409) eine Verschiebung des Schließkolbens (409) relativ zum Kanisteradapter (4) bewirkt.

11. Vorrichtung nach Anspruch 1 **dadurch gekennzeichnet, dass** der erste Kopplungsteil (301) des Tankadapters (3) mit einem Betätigungselement (302) drehbar am Tankadapter gehaltert ist.

12. Vorrichtung nach Anspruch 7 und 11 **dadurch gekennzeichnet, dass** die erste Kontaktfläche (409a) des Schließkolbens (409) drehfest mit der zweiten Kontaktfläche (306a) am Tankadapter (3) in Kontakt steht, wenn der zweite Kopplungsteil (401) des Kanisteradapters (4) mit dem ersten Kopplungsteil (301) des Tankadapters (3) gekoppelt ist, und wobei eine anschließende Drehung des zweiten Kopplungsteils (401) relativ zum Tankadapter (3) eine Verschiebung des Schließkolbens (409) relativ zum Kanisteradapter (4) bewirkt.

13. Vorrichtung nach Anspruch 7 **dadurch gekennzeichnet, dass** die erste Kontaktfläche (409a) des Schließkolbens (409) mit der zweiten Kontaktfläche (306a) am Tankadapter (3) in Kontakt steht, wenn der zweite Kopplungsteil (401) des Kanisteradapters (4) mit dem ersten Kopplungsteil (301) des Tankadapters (3) gekoppelt ist, und wobei die zweite Kontaktfläche (306a) in Bewegungsrichtung des Schließkolbens (409) verschiebbar am Tankadapter (3) gehaltert ist und ein Federelement (304) die zweite Kontaktfläche (306a) gegen die erste Kontaktfläche (409a) drückt.

14. Vorrichtung nach Anspruch 7 **gekennzeichnet, durch** ein Betätigungselement (315) zum Abheben der zweiten Kontaktfläche (306a) von der ersten Kontaktfläche (409a), während der zweite Kopplungsteil (401) des Kanisteradapters (4) mit dem ersten Kopplungsteil (301) des Tankadapters (3) gekoppelt ist.

15. Vorrichtung nach Anspruch 1 **dadurch gekennzeichnet, dass** der Kanisteradapter (4) im Bereich des Kanister-Befestigungsflansches (400) ein Folienschneidelement (404) zum Aufschneiden einer Siegelfolie (203) des Kanisters (2) aufweist.

16. Vorrichtung nach Anspruch 15 **dadurch gekennzeichnet, dass** das Folienschneidelement (404) durch einen Zahnkranz gebildet wird.

17. Vorrichtung nach Anspruch 15 **dadurch gekennzeichnet, dass** der Kanisteradapter (4) eine Schiebehülse (405) aufweist, an welcher der Kanister-Befestigungsflansch (400) befestigt, wobei die Schiebehülse (405) relativ zum Folienschneidelement (404) axial verschiebbar ist.

18. Vorrichtung nach Anspruch 1 **dadurch gekennzeichnet, dass** der Kanister-Befestigungsflansch (400) Bestandteil des Kanisters (2) ist.

19. Vorrichtung nach Anspruch 1 **dadurch gekennzeichnet, dass** ein Spül- oder Abschlussdeckel (9) vorgesehen ist, der anstelle des Kanisteradapters (4) mit dem Tankadapter (3) koppelbar ist und den Tankadapter (3) nach außen verschließt.
